# EUROPÄISCHE PATENTSCHRIFT

(11) **EP 0 564 872 B1**
(45) Veröffentlichungstag und Bekanntmachung des Hinweises auf die Patenterteilung: **22.05.1996**
(21) Anmeldenummer: 93104460.6
(22) Anmeldetag: 18.03.1993
(51) Int. Cl.: B60N 2/44, A47C 31/10

(54) **Sitzbezug zum Schutz eines Kraftfahrzeug-Sitzes aus einem doppellagigen Teil aus Kunststoffolie**
Seat cover for protecting motor car seats made of a double-layer plastic film
Revêtement de sièges pour la protection de sièges de véhicules automobiles en feuille plastique en deux couches

(30) Priorität: 28.03.1992 DE 4210232; 28.03.1992 DE 9204236 U
(43) Veröffentlichungstag der Anmeldung: 13.10.1993
(73) Patentinhaber: HORN & BAUER GmbH & Co. KG, D-34613 Schwalmstadt (DE)
(72) Erfinder: Horn, Jörg, W-3578 Schwalmstadt 1 (DE)
(74) Vertreter: Rehberg, Elmar, Dipl.-Ing.

(56) Entgegenhaltungen:
- DE-A- 2 851 649
- DE-B- 1 630 878
- DE-C- 691 998
- DE-U- 8 528 787
- FR-A- 1 223 120
- FR-A- 1 363 244
- FR-A- 2 572 634
- GB-A- 929 027
- GB-A- 1 032 588
- GB-A- 1 112 527
- US-A- 4 676 376
- US-A- 4 884 839

## Beschreibung

Die Erfindung bezieht sich auf einen Sitzbezug zum Schutz eines Kraftfahrzeug-Sitzes mit den im Oberbegriff des Anspruches 1 angegebenen Merkmalen. Der Sitzbezug weist ggf. eine das Sitzpolster zumindest teilweise umschließende zweite Tasche auf. Die zweite Tasche kann auch ganz fehlen oder durch eine verlängerte Vorderlage ersetzt sein. Der Sitzbezug kann - einmal oder auch mehrmals - auch in Kraftfahrzeugwerkstätten bei Reparaturarbeiten, Inspektionen oder dgl. eingesetzt werden. Die Erfindung zeigt weiterhin Verfahren zur Herstellung solcher Sitzbezüge aus Kunststoffolie.

Sitzbezüge aus Kunststoffolie werden über Kraftfahrzeug-Sitze gestülpt bzw. gezogen, um eine Verschmutzung des Kraftfahrzeug-Sitzes durch Monteure und andere Personen zu verhindern. Bekannt sind solche Sitzbezüge in ihrer Anwendung in Automobilwerkstätten, wenn an Kraftfahrzeugen eine Inspektion oder Reparatur durchgeführt wird. Aber auch bei der Erstausstattung eines Kraftfahrzeugs, also im Automobilwerk bei der Montage des Kraftfahrzeugs, sind die Kraftfahrzeugsitze bereits einer Verschmutzungsgefahr ausgesetzt. Diese Verschmutzungsgefahr beginnt sogar bereits beim Hersteller der Kraftfahrzeug-Sitze und bei der Zulieferung der Sitze zum Automobilwerk. Sie setzt sich fort bei der Bestückung von Förderanlagen mit den Sitzen, über die der Transport der Kraftfahrzeug-Sitze zum Montageband des Automobilwerks führt. Weiterhin müssen die Kraftfahrzeug-Sitze in die Automobilkarosserie eingebaut werden. Auch während der Montage weiterer Teile am Kraftfahrzeug kommt eine Vielzahl von Monteuren nacheinander mit den Kraftfahrzeug-Sitzen in Berührung. Schließlich muß das fertig montierte Kraftfahrzeug vom Band gefahren, auf Lastkraftwagen oder Eisenbahnwaggons aufgefahren und letztlich beim Kraftfahrzeughändler noch mehrmals gehandhabt werden, bis das Kraftfahrzeug letztlich in die Hand des Erwerbers bzw. Käufers ausgeliefert werden kann. Da das Gewicht der Kraftfahrzeug-Sitze ansteigt, und zwar insbesondere durch den Einbau von Verstellmotoren und anderen Elementen, wird es immer mühevoller, die Kraftfahrzeug-Sitze durch den Monteur von Hand in die Fahrzeugkarosserie einzubauen. Es bietet sich hier die Robotermontage am Montageband an. Ein versuchsweise eingesetzter Roboter besitzt eine Rüsselplatte, mit der er bei in normaler Stellung abgesetztem Sitz in den Spalt zwischen Rückenlehne und Sitzpolster eingreift und den Sitz - meist paarweise - in die Karosserie einschwenkt und dort positioniert. Anschließend wird die Rüsselplatte aus dem Spalt zwischen Rückenlehne und Sitzpolster herausgezogen. Bei Verwendung üblicher Sitzbezüge würde die Rüsselplatte beim Eindringen in den Spalt die Vorderlage des Sitzbezugs aufschlitzen, so daß die Schutzfunktion des Sitzbezugs wesentlich beeinträchtigt ist. Man hat deshalb versuchsweise die das Sitzpolster umgreifende Tasche von dem Sitzpolster gelöst und greift mit der Rüsselplatte des Roboters nunmehr unterhalb der Folie des Sitzbezugs in den Spalt zwischen Rückenlehne und Sitzpolster ein. Dabei besteht allerdings die Gefahr, daß der Kraftfahrzeug-Sitz durch die Rüsselplatte selbst verschmutzt wird. Selbst, wenn dies nicht der Fall ist, stellt es einen zusätzlichen Arbeitsaufwand dar, den Sitzbezug im Bereich des Sitzpolsters von diesem zu lösen und nach der Montage des Kraftfahrzeug-Sitzes in der Karosserie den Sitzbezug mit seiner Tasche auf das Sitzpolster wieder aufzuziehen. Nachteilig ist weiterhin, daß das Sitzpolster während der Montage des Sitzes in die Karosserie ungeschützt ist.

Von der Herstellung des Sitzes beim Zulieferer bis zur Auslieferung des Kraftfahrzeugs an den Erwerber oder Kunden kommen die Kraftfahrzeug-Sitze etwa 30 bis 35 mal in Kontakt mit Monteuren und anderen Personen, so daß hier eine erhebliche Verschmutzungsgefahr besteht. Um dieser Verschmutzungsgefahr entgegenzuwirken, sind die bereits beschriebenen Sitzbezüge aus Kunststoffolie bekannt, die oft bereits beim Sitzhersteller, spätestens aber beim Kraftfahrzeughersteller, über die Kraftfahrzeug-Sitze, insbesondere den Fahrersitz, gestülpt werden und erst vor Auslieferung des Fahrzeugs an den Kunden entfernt werden. Solche Sitzbezüge für Erstausrüstung unterscheiden sich üblicherweise nicht sonderlich von den Sitzbezügen, die während der Inspektion oder Reparatur eines Kraftfahrzeugs benutzt werden. Sie können aus vergleichsweise dickerer Kunststoffolie hergestellt werden, die der insoweit größeren Beanspruchung gerecht wird.

Ein Sitzbezug der eingangs beschriebenen Art ist aus der GB-A-0 929 027 bekannt. Der Sitzbezug weist an seinen beiden Endbereichen je eine Tasche auf, wobei die eine Tasche zur Aufnahme eines Teils des Sitzpolsters und die andere Tasche zur Aufnahme eines Teils der Rückenlehne des Sitzes bestimmt ist. Der Sitzbezug weist eine Vorderlage auf, die länger gestaltet ist, als es der Summe der wirksamen Längen der Rücklehne und des Sitzpolsters entspricht. Aufgrund dieser insoweit länger ausgebildeten Vorderlage ist es möglich, die Vorderlage in eine Falte zu legen und diese Falte als Fixier- und Eingriffsmittel im Bereich eines Spalts zwischen Rückenlehne und Sitzpolster einzuklemmen. Die Falte ist nach beiden Sitz-Seiten hin offen.

Die GB-A-1 112 527 zeigt einen Sitzbezug zum Schutz eines Kraftfahrzeug-Sitzes, bei dem ebenfalls zwei Taschen zur Aufnahme eines Teils der Rückenlehne einerseits und des Sitzpolsters andererseits vorhanden sind. Die Vorderlage ist jedoch nur geringfügig länger als die Summe der wirksamen Längen der Rückenlehne und des Sitzpolsters ausgebildet, so daß im Bereich des Spaltes zwischen Rückenlehne und Sitzpolster eine Abnähernaht angebracht werden kann, an der schlaufen- oder röhrenartige Hilfsmittel befestigt werden können, durch die dann eine Art Knebel eingeführt wird. Dieser Knebel füllt den dreieckförmigen Spalt zwischen Rückenlehne und Sitzpolster aus und bewirkt damit eine Verankerung des Sitzbezuges im Bereich des Spaltes zwischen Rückenlehne und Sitzpolster.

Ein weiterer Sitzbezug ist aus der DE-B-16 30 878 bekannt. Bei der Herstellung wird ein Schlauch aus Kunststoffolie durch einen Längsschnitt aufgeschnitten. Die dabei entstehenden beiden Ränder werden voneinander entfernt und flachgefaltet auf das übrige Material des Schlauchs gelegt, wobei eine flachliegende, im wesentlichen doppellagige Bahn, gebildet wird, bei der die Kunststoffolie im Bereich der beiden freien Ränder links und rechts umgeschlagen ist. Durch eine Querschweißung, also quer zur Förderrichtung der Folienbahn bei der Herstellung der Sitzbezüge, werden pro Sitzbezug die umgeschlagenen Bereiche, die insgesamt gleichsam eine Rücklage bilden, mit der durchgehenden Vorderlage für jeden Sitzbezug miteinander verbunden. Dabei werden zwei Taschen gebildet, die in der Regel unterschiedlich tief bemessen sind, wobei die eine Tasche zur Aufnahme der Rückenlehne des Kraftfahrzeug-Sitzes und die andere Tasche zur Aufnahme bzw. zum Umschließen des Sitzpolsters des Kraftfahrzeug-Sitzes bestimmt sind. Die durchgehende Seite des Schlauchs bzw. Sitzbezugs ist als Vorderlage bezeichnet, weil sie in der über den Sitz gestülpten Stellung des Sitzbezugs vorn liegt und damit auf der Sitzfläche des Sitzpolsters und auf der Rücklehnenfläche der Rückenlehne anliegt. Die andere Lage des Sitzbezugs ist als Rücklage bezeichnet, weil sie in montiertem Zustand des Sitzbezugs hinter der Rückenlehne bzw. unter dem Sitzpolster zu liegen kommt und damit nach rückwärts ausgerichtet ist. Solche bekannten Sitzbezüge umschließen den Kraftfahrzeug-Sitz mehr oder weniger lose. Hierdurch besteht die Gefahr, daß ein solcher bekannter Sitzbezug während seiner Benutzung verrutscht, so daß sich im Übergangsbereich zwischen Sitzpolster und Rückenlehne mehr oder weniger große ungeschützte Flächen ergeben können, die dann nicht vor Verschmutzung geschützt sind. Wenn Kraftfahrzeug-Sitze, mit der Rückenlehne nach unten, an einem Förderband hängend, dem Montageband des Kraftfahrzeugs zugeführt werden, besteht weiterhin die Gefahr, daß sich die Sitzbezüge ungewollt von dem Kraftfahrzeug-Sitz lösen und herabfallen. Damit erfüllen sie dann ihre Schutzfunktion auch nicht mehr. Um dieser Gefahr entgegenzuwirken, ist es bekannt, als gesondertes Teil zu dem Sitzbezug ein Gummiband zu verwenden, welches als geschlossene Schleife nach dem Überstülpen des Sitzbezugs so über die Rückenlehne geführt wird, daß es im Übergangsbereich zwischen Sitzpolster und Rückenlehne anliegt. Durch diese Maßnahme wird das unbeabsichtigte Herabfallen eines Sitzbezugs von einem hängend geförderten Kraftfahrzeug-Sitz vermieden. Gleichzeitig wird die Vorderlage des Sitzbezugs im Übergangsbereich zwischen Sitzpolster und Rückenlehne durch das Gummiband fixiert, so daß einer Verrutschungsgefahr entgegengewirkt wird. Die Verwendung solcher Gummibänder zusätzlich zu Sitzbezügen ist jedoch aufwendig und erbringt nur bedingt Abhilfe gegen die Verschmutzungsgefahr. Bei einer Robotermontage mit Hilfe einer Rüsselplatte wird die Vorderlage des Sitzbezugs durchtrennt, so daß sie zumindest von dieser Durchtrennung an ihre Schutzfunktion nicht mehr optimal erfüllen kann.

Statt der zusätzlichen Verwendung eines Gummibands ist auch bereits bekannt, etwa im Mittelbereich des freien Rands der Tasche, die die Rückenlehne umschließt, zwei Folienstreifen anzuschweißen. Diese beiden Folienstreifen werden nach Art von Bändern an einer Kittelschürze nach dem Überstülpen des Sitzbezugs über den Sitz nach vorn geschlungen und dort miteinander verknotet, so daß auch hier ein engeres Anliegen der Vorderlage des Sitzbezugs im Übergangsbereich zwischen Sitzpolster und Rückenlehne erreicht wird. Die Herstellung dieses zusätzlichen Folienstreifens und insbesondere das Anschweißen ist aufwendig, erfordert nach dem überstülpen des Sitzbezugs einen zusätzlichen Verknotungsvorgang und bringt darüberhinaus gegen die Verschmutzungsgefahr auch nur bedingt Abhilfe. Für die Robotermontage sind solche Folienstreifen an sich ohne Belang, d. h. sie lösen dieses Problem auch nicht, sondern sind eher hinderlich.

Es ist weiterhin bekannt, bereits beim Hersteller des Kraftfahrzeug-Sitzes das Sitzpolster einerseits und die Rückenlehne andererseits in je ein Schrumpffolienstück einzuschrumpfen und erst anschließend bei der Montage des Sitzes das Sitzpolster und die Rückenlehne zusammenzubringen. Diese beiden Teile aus Schrumpffolie verbleiben dann an dem Kraftfahrzeug-Sitz und schützen diesen auf seinem gesamten Weg über den Automobilhersteller bis zur Auslieferung des Kraftfahrzeugs an den Käufer oder Kunden. Das Aufschrumpfen bedeutet hier jedoch einen erheblichen zusätzlichen Aufwand, auch an entsprechenden Schrumpfvorrichtungen. Ein solcher Kraftfahrzeug-Sitz läßt sich zwar mit Hilfe eines Roboters und einer Rüsselplatten handhaben bzw. montieren. Seine Schutzwirkung ist infolge der unterbrochenen Vorderlage jedoch nur bedingt vorhanden. Weiterhin ist nachteilig, daß die Gefahr einer Kondensation von Wasser oder Lösungsmitteldämpfen besteht; das kann zu Flecken oder Farbveränderungen am Sitz führen. Das Abnehmen der Schrumpffolienstücke ist aufwendig.

Der Erfindung liegt die Aufgabe zugrunde, einen insbesondere für Erstausrüstung geeigneten Sitzbezug aus Kunststoffolie zu schaffen, der maschinell herstellbar ist, bereits beim Sitzhersteller aufgebracht werden kann und den Sitz bis zur Auslieferung des Fahrzeugs an den Käufer wirksam schützt, und zwar auch während der Montage des Sitzes in die Karosserie hinein unter Verwendung eines Roboters mit Rüsselplatte oder bei Sitzmontage von Hand.

Erfindungsgemäß wird dies dadurch erreicht, daß die Vorderlage eine nach beiden Sitz-Seiten geschlossene Tasche als Fixier- und Eingriffsmittel zum Einklemmen im Bereich des Spalts zwischen Rückenlehne und Sitzpolster aufweist.

Damit wird neben den beiden Taschen als drittes Fixier- und Eingriffsmittel eine weitere Tasche geschaffen, welche mit den beiden Taschen zusammenwirkt und einen verläßlichen straffen Sitz des Sitzbezugs auf dem Kraftfahrzeug-Sitz ermöglicht, so daß ein mit einem solchen Sitzbezug versehener Kraftfahrzeug-Sitz auch auf einem Fördermittel köpfüber hängend transporttiert werden kann, ohne daß die Gefahr besteht, daß der Sitzbezug herabfällt. Das Fixier- und Eingriffsmittel in Form der Tasche ist also nicht nur zweilagig ausgebildet, sondern auch nach den beiden Sitz-Seiten geschlossen. Die Tasche erlaubt es, sie in den Spalt zwischen Rückenlehne und Sitzpolster zu schieben, wodurch mehrere Funktionen und Vorteile gleichzeitig erzielt werden. Die Tasche dient zunächst einmal der Fixierung des Sitzbezugs im Bereich des Spalts. Durch die üblicherweise vorhandene Spannung zwischen der Rückenlehne und dem Sitzpolster wird die Tasche des Sitzbezugs hier eingeklemmt, was sich nicht nur insofern vorteilhaft auswirkt, daß der die Rückenlehne umschließende Teil der Vorderlage und der das Sitzpolster umschließende Teil der Vorderlage jeweils straffer am Kraftfahrzeug-Sitz anliegen und gehalten werden, sondern es tritt auch der weitere Vorteil auf, daß die Verrutschungsgefahr gerade im Bereich des Spalts erheblich reduziert ist, so daß sich so gut wie keine ungeschützten Flächenbereiche ergeben können. Weiterhin läßt sich ein Kraftfahrzeug-Sitz, ausgestattet mit diesem Schonbezug, auch für die Robotermontage mit einer Rüsselplatte anwenden, und zwar ohne daß die Vorderlage durchtrennt wird. Die Tasche wird zweckmäßig bereits beim Sitzhersteller in den Spalt zwischen Rückenlehne und Sitzpolster eingeführt. Der Sitzbezug wird damit zusätzlich am Kraftfahrzeug-Sitz fixiert und das Einschieben der Rüsselplatte des Roboters am Montageband führt zu keiner Veränderung des Sitzes des Sitzbezugs auf dem Kraftfahrzeug-Sitz.

In einer ersten wesentlichen Ausführungsform kann die Tasche aus dem Material der Vorderlage gebildet sein, welches die Länge der Rückenlehne und die Länge des Sitzpolsters überragt. Unter der Länge der Rückenlehne und der Länge des Sitzpolsters wird die Länge an diesen Teilen verstanden, die jeweils der durch die Vorderlage in der übergestülpten Stellung des Sitzbezugs abgedeckten Länge entspricht. Sofern der Kraftfahrzeug-Sitz bereits mit Kopfstützen ausgestattet ist und diese Kopfstützen ebenfalls von der Tasche, die für die Rückenlehne bestimmt ist, geschützt aufgenommen werden soll, muß die betreffende Länge der Kopfstützen ebenfalls berücksichtigt werden. Wichtig ist bei diesem Ausführungsbeispiel, daß die Vorderlage des Sitzbezugs länger als bisher ausgebildet ist, so daß die Vorderlage am Übergang zwischen der Rückenanlagefläche zu der nutzbaren Sitzfläche des Sitzpolsters nicht einfach abknickt, sondern zur Bildung der Tasche hier zusätzliche Kunststoffolie zur Verfügung steht. Die zusätzliche Länge der Vorderlage muß nicht unbedingt etwa der doppelten Tiefe des Spaltes zwischen Rückenlehne und Sitzpolster entsprechen, sondern kann auch kürzer ausgebildet sein; wichtig ist aber eine solche zusätzliche Länge, daß die daraus gebildete Tasche im Spalt festgeklemmt wird. Auch dieser Sitzbezug läßt sich mit einer Rüsselplatte oder auch von Hand montieren. Der Sitzbezug bleibt auch unverletzt, d. h. er wird nicht durchstoßen und nicht durchbrochen, so daß während der weiteren Montage des Kraftfahrzeugs in den Spalt fallende Gegenstände auch in der Tasche gesammelt und mit der Abnahme des Sitzbezugs vor der Übergabe des Kraftfahrzeugs an den Kunden zwangsläufig mitentfernt werden. Der Sitzbezug läßt sich aber auch dann mit Vorteil anwenden, wenn die Kraftfahrzeug-Sitze von Hand in die Karosserie eingebaut werden. Beim Sitzhersteller kann die Tasche entweder von Hand oder aber auch bereits mit Hilfe eines Werkzeugs mit einer Rüsselplatte in den Spalt zwischen Rückenlehne und Sitzpolster eingeführt und dort verankert werden. Wenn die Vorderlage des Sitzbezuges aus einem durchgehenden Folienstück gebildet ist, kann der Vorteil auftreten, daß die gebildete Tasche im Taschengrund keine Schweißnaht aufweist und damit eine mögliche Schwachstelle vermieden wird. Die Tasche kann über die Länge des Spalts zwischen Rückenlehne und Sitzpolster durchgehend vorgesehen sein oder aber nur einen Teil dieser Strecke bedecken, wobei es auf den Mittelbereich dieses Spalts ankommt. Es ist auch möglich, trotz durchgehender Tasche nur den Mittelbereich dieser Tasche in den Spalt einzuführen, wobei sich die Randbereiche unter Faltenbildung in eine Übergangsstellung bewegen.

Die Tasche kann beidseitig Querschweißungen aufweisen. Eine punktförmige Schweißung ist im allgemeinen nicht sinnvoll, jedoch gleichwohl möglich. Vorteilhaft ist die Bildung einer längs der Querschweißung geschlossenen Tasche, so daß das Eindringen der Rüsselplatte von der offenen Seite der Tasche her jederzeit möglich ist. Durch die Querschweißung werden an den Rändern des Sitzbezugs am Grund des aufgespannten Winkel zwischen der Rücklehnenfläche und der nutzbaren Fläche des Sitzpolsters die Kunststoffolie der Vorderlage direkt miteinander verbunden, so daß hier eine Ausrichtwirkung und Straffungswirkung auf den Sitzbezug beim Überstülpen über den Kraftfahrzeugsitz und während seiner Nutzungsdauer eintritt, so daß der Gefahr von Bildung ungeschützter Flächenbereiche durch Verrutschen entgegengewirkt ist.

Die Tasche kann beidseitig Schrägschweißungen aufweisen. Hierbei entsteht zwar Abfall während der Herstellung der Sitzbezüge. Dieser Abfall ist jedoch recycelbar und es bildet sich durch die beiden Schrägschweißungen die in den Spalt eindringende Tasche besser vor. Da die Rüsselplatte des Roboters ohnehin nur den Mittelbereich des Spalts erfaßt, ist diese Formgebung keineswegs nachteilig, sondern sogar eher vorteilhaft, weil eine Materialanhäufung unter Faltenbildung in den Endbereichen des Spalts zwischen Rückenlehne und Sitzpolster hierdurch vermieden wird.

Schließlich ist es auch möglich, die Tasche durch eine in Spaltrichtung geführte Formschweißung geschlossen auszubilden, die in ihrer Breite den Mittelbereich des Spalts überdeckt. Dabei tritt der besondere Vorteil auf, daß die Vorderlage nicht nur, wie bei Anwendung einer Querschweißung, genau am Rand des Sitzbezugs miteinander verbunden ist, sondern hier Randbereiche miteinander verbunden werden, eben mit Ausnahme des Mittelbereichs, in welchem sich die an die Breite der Rüsselplatte angepaßte Tasche befindet. Bei dieser Ausbildung erhält der Sitzbezug vorteilhaft einen weitgehend glatten, nicht durch eine Faltenbildung beeinträchtigten Sitz auf dem Kraftfahrzeug-Sitz. Dies hat technische Vorteile und wirkt in ästhetischer Hinsicht ansprechend. Die Tasche muß nicht unbedingt mit der rückwärtigen Fläche der Rückenlehne fluchtend abschließen, sondern die Tasche kann mehr oder weniger tief gestaltet werden, wobei es lediglich wichtig ist, daß der engste Bereich des Spalts zwischen Rückenlehne und Sitzpolster beim Einschieben der Tasche durchsetzt wird. Es versteht sich, daß die Länge bzw. Breite dieser Tasche auch an die entsprechende Abmessung der Rüsselplatte und deren Eindringweg in den Spalt abgestimmt sein muß. Eine geringfügige Dehnwirkung auf die Kunststoffolie der Vorderlage ist dabei keineswegs schädlich, sondern kann vorteilhaft genutzt werden, um einen straffen Sitz des Sitzbezugs zu erreichen. Lediglich ein Durchstoßen der Kunststoffolie mit der Rüsselplatte muß vermieden werden. Wenn statt einer zwei Taschen gebildet sind, die die beiden Außenbereiche des Spalts abdecken, wird eine doppelte Fixierung gerade in den kritischen Außenbereichen erzielt.

Die Vorderlage kann auf ihrer Rückseite rutschgesichert ausgestaltet sein, indem sie auf ihrer Rückseite einen höheren Reibungskoeffizienten als auf ihrer Vorderseite aufweist. Die Vorderseite der Vorderlage ist demgegenüber glatt ausgebildet. Damit kann sich der Monteur auf dem über den Kraftfahrzeug-Sitz gestülpten Sitzbezug frei bewegen, ohne daß eine Verrutschungsgefahr für den Sitzbezug gegeben ist. Damit wird zugleich sichergestellt, daß auch die als Fixier- und Eingriffsmittel dienende Tasche verläßlich in dem Spalt festgehalten wird. Die Handhabung des Sitzes mit der Rüsselplatte durch einen Roboter wird hierdurch auch begünstigt, da die Rüsselplatte nur mit der glatten Seite der Vorderlage in Wirkverbindung tritt, so daß auch das Herausziehen der Rüsselplatte aus dem Spalt nicht dazu führt, daß gleichzeitig die Tasche gelöst wird. Die unterschiedliche Ausbildung der beiden Seiten der Vorderlage hinsichtlich des Reibungskoeffizienten kann durch eine koextrudierte Folie, eine beschichtete oder kaschierte Folie o. dgl. realisiert werden. Hier bieten sich dem Fachmann mehrere Möglichkeiten.

Ein Verfahren zur Herstellung von Sitzbezügen zum Schutz von Kraftfahrzeug-Sitzen geht von Kunststoffolie in Form eines geschlitzten Schlauchs aus, wobei die Vorderlage und die Rücklage bildende Bahnen gebildet und die beiden Bahnen für jeden Sitzbezug durch Querschweißung miteinander verbunden werden. Dabei wird die auch die Vorderlage bildende Bahn der Kunststoffolie längsgefaltet und zur Bildung des Fixier- und Eingriffsmittels durch eine punkt- oder linienförmige Schweißung taschenartig geschlossen. Dabei wird also der Sitzbezug aus einem geschlitzen Schlauch, also aus einem Stück, erstellt. Die Schweißung kann als Querschweißung, Schrägschweißung oder Formschweißung realisiert werden.

Bei einem weiteren Verfahren zur Herstellung eines solchen Sitzbezugs zum Schutz von Kraftfahrzeug-Sitzen wird die Kunststoffolie in Form von Flachfolien eingesetzt und die Vorderlage und die Rücklage bildende Bahnen gebildet, wobei die beiden Bahnen für jeden Sitzbezug durch Querschweißung miteinander verbunden werden. Dabei werden die auch die Vorderlage bildenden Bahnen mit den den Taschen abgekehrten Rändern aufeinandergelegt und zur Bildung des Fixier- und Eingriffsmittels durch eine punkt- oder linienförmige Schweißung taschenartig geschlossen. Auch dies kann durch Querschweißung, Schrägschweißung oder Formschweißung geschehen. Ausgangspunkt für die Bahn der Sitzbezüge sind hier zwei Flachfolien, die insoweit vorbereitet werden, als die eine Flachfolie die für die Aufnahme der Rückenlehne bestimmte Tasche aufweisen und die andere Flachfolie die für die Aufnahme des Sitzpolsters bestimmte Tasche trägt.

Bei Realisierung einer Formschweißung ist es sinnvoll, die Tasche im Mittelbereich des Spalts zwischen Rückenlehne und Sitzpolster auszubilden und die Vorderlage in Bereichen neben der Tasche miteinander zu verbinden. Bei allen aufgezeigten Herstellverfahren ist es möglich, die Sitzbezüge stückweise herzustellen, also als Einzelstücke voneinander zu trennen und beispielsweise min Stapelform darzubieten. Andererseits ist es möglich, die Sitzbezüge in einer Bahn über Perforationen aneinanderhängen zu lassen und zu einer Vorratsrolle aufzuwickeln, von der die Sitzbezüge einzeln abtrennbar sind. Bei Verwendung in Form der Vorratsrolle ist es zweckmäßig, die als Fixier- und Eingriffsmittel dienende Tasche in Richtung auf die Taschen für die Rückenlehne und das Sitzpolster überzufalten, bevor das Aufwickeln zu einer Vorratsrolle erfolgt. Dabei entstehen über die Breite der Vorratsrolle weitgehend durchgehend vierlagige Bereiche, so daß die Vorratsrolle zylindrische Gestalt bekommt und eine Konizität vermieden wird.

Die Erfindung wird an bevorzugten Ausführungsbeispielen und Herstellungsweisen weiter erläutert und beschrieben. Es zeigen:
- Figur 1: eine Draufsicht auf einen flachliegenden Sitzbezug, und zwar auf dessen Vorderlage,
- Figur 2: einen Schnitt gemäß der Linie II-II in Figur 1,
- Figur 3: eine Seitenansicht eines Kraftfahrzeug-Sitzes mit dem übergestülpten Sitzbezug gemäß den Figuren 1 und 2,
- Figur 4: eine Draufsicht auf einen flachliegenden Sitzbezug in einer zweiten Ausführungsform, und zwar auf dessen Vorderlage,
- Figur 5: einen Schnitt gemäß der Linie V-V in Figur 4,
- Figur 6: eine Draufsicht auf einen flachliegenden Sitzbezug in einer weiteren Ausführungsform,
- Figur 7: eine weitere Ausführungsform des Sitzbezugs in Draufsicht,
- Figur 8: eine weitere Ausbildungsform des Sitzbezugs in Draufsicht,
- Figur 9: einen Schnitt gemäß der Linie IX-IX in Figur 8,
- Figur 10: die Verdeutlichung eines ersten Verfahrensschritts bei der Herstellung eines Schonbezugs aus zwei Flachfolien,
- Figur 11: die Verdeutlichung weiterer sich an Figur 10 anschließender Verfahrensschritte,
- Figur 12: erste Verfahrensschritte eines weiteren Herstellverfahrens,
- Figur 13: nachgeordnete Verfahrensschritte,
- Figur 14: weitere Verfahrensschritte des Herstellverfahrens gemäß den Figuren 12 bis 14,
- Figur 15: die Verdeutlichung eines Herstellverfahrens in Querschnitten, bei denen ein Halbschlauch eingesetzt wird,
- Figur 16: eine Draufsicht auf eine weitere Ausführungsform des Sitzbezugs,
- Figur 17: eine Draufsicht auf einen flachliegenden Sitzbezug in einer weiteren Ausführungsform, und
- Figur 18: einen Schnitt gemäß der Linie XXII-XXII in Figur 17.

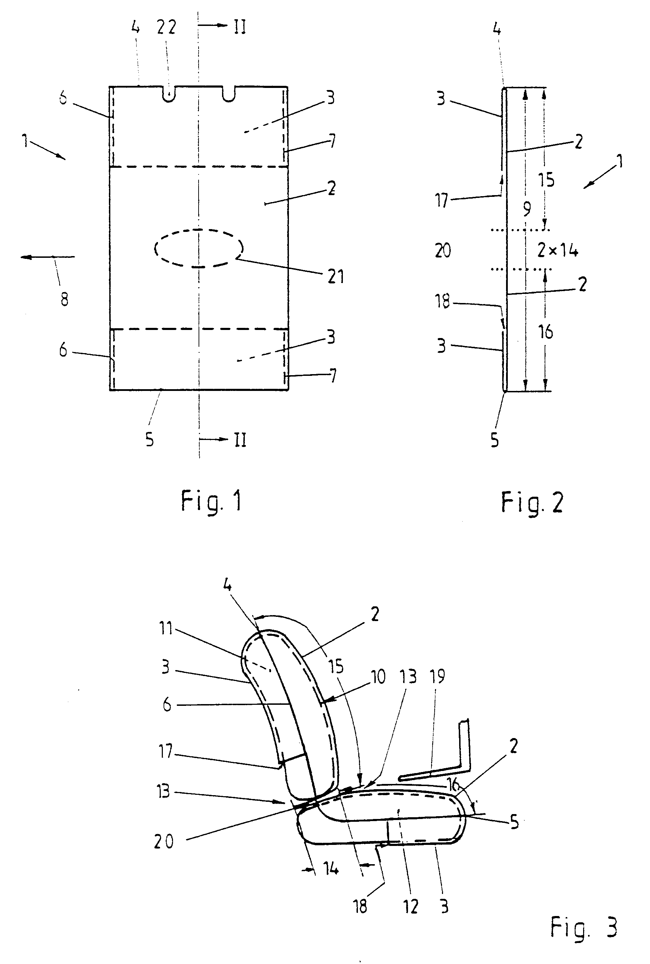

Der in Figur 1 in flachliegendem Zustand dargestellte Sitzbezug 1 besteht bereichsweise aus doppellagiger Kunststoffolie, während andere Bereiche einlagig ausgebildet sind, wie dies anhand von Figur 2 leicht erkennbar ist. Es ist eine Vorderlage 2 und eine Rücklage 3 gebildet, wobei die Vorderlage 2 die Anlehnfläche der Rückenlehne und die nutzbare Sitzfläche des Sitzpolsters abdeckt, während die Rücklage 3 in den zwei Bereichen die Rückenlehne rückseitig und das Sitzpolster unterseitig bzw. in Seitenbereichen abdecken bzw. umschließen. Vorderlage 2 und Rücklage 3 bilden ein zusammenhängendes Materialstück Kunststoffolie, welches aus einem durchgehenden Materialstück, z. B. in Form eines Halbschlauchs, oder aus mehreren Materialstücken in Flachfolienform o. dgl. erstellt sein mag. Die Vorderlage 2 und die Rücklage 3 können über eine Längsfalte 4 in Verbindung stehen, die auch als Längsschweißung ausgebildet sein kann. Auf der anderen Längsseite stehen die Vorderlage 2 und die Rücklage 3 über eine Längsschweißung 5 miteinander in Verbindung, die ebenfalls als Längsfalte ausgebildet sein kann. Außer im Bereich der Längsfalte 4 und der Längsschweißung 5 ist die Vorderlage 2 mit der Rücklage 3 jedoch auch noch über zwei Querschweißungen 6 und 7 verbunden, wobei, wie Figur 1 erkennen läßt, die beiden Querschweißungen 6 und 7 jeweils in zwei Teile zerfallen. Die Bezeichnung längs und quer ist mit Hinblick auf eine Förderrichtung gemäß Pfeil 8 gewählt, also eine Richtung, in der eine Endlosbahn, hier in Form eines Halbschlauchs, bei der Herstellung einzelner Sitzbezüge verarbeitet wird. in Richtungen parallel zum Pfeil 8 wird der Zusatz Längs- und in Richtungen senkrecht dazu der Begriff Quer-, also die Längsfalte 4 einerseits und die Querschweißung 6 andererseits, benutzt. Bezogen auf den Kraftfahrzeug-Sitz ist es anschaulicher, die Richtungen von Länge und Breite zu wechseln.

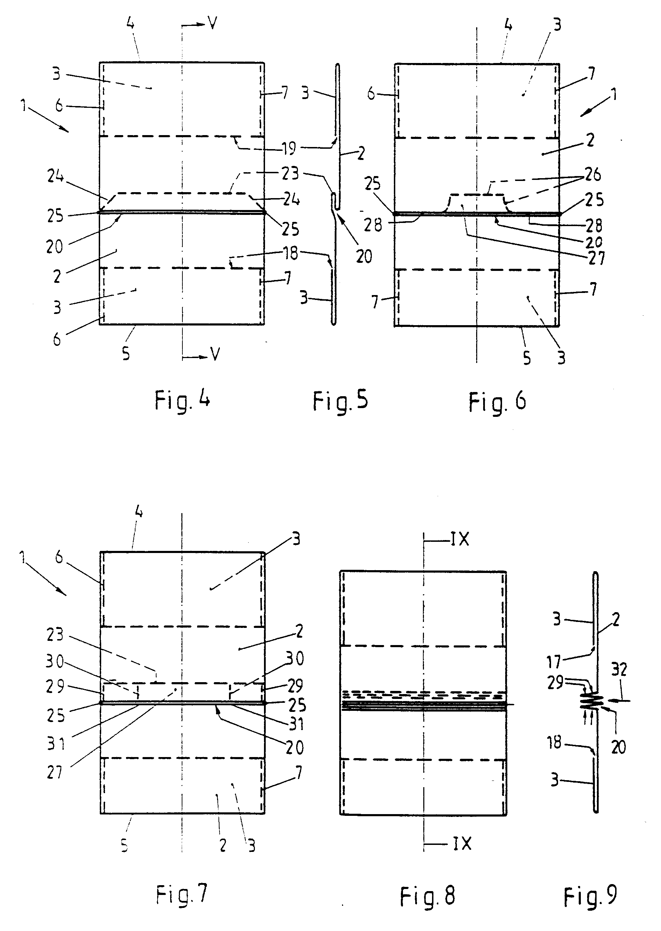

Die Vorderlage 2 besitzt somit eine Breite 9, die sich von der Längsfalte 4 bis zur Längsschweißung 5 erstreckt. Der in Figur 3 gestrichelt angedeutete Kraftfahrzeug-Sitz 10 weist eine Rückenlehne 11 und ein Sitzpolster 12 auf. Zwischen Rückenlehne 11 und Sitzpolster 12 befindet sich ein Spalt 13, dessen Tiefe 14 in Figur 3 angegeben ist und etwa der Dicke der Rückenlehne 11 oder dem Überlappungsbereich zwischen der Dicke der Rückenlehne 11 und dem nicht nutzbaren Teil des Sitzpolsters 12 entsprechen mag. Die Rückenlehne 11 besitzt eine Länge 15, die sich im oberen Bereich bogenförmig von der Längsfalte 4 ausgehend und im unteren Bereich mehr oder weniger gerade auf den Spalt 13 zu erstreckt. Es handelt sich um die Länge der Fläche der Rückenlehne 11, die von dem betreffenden Teil der Vorderlage 2 abgedeckt werden muß. Das Sitzpolster 12 besitzt eine für Sitzzwecke nutzbare Länge 16, die sich ausgehend vom Beginn des Spaltes 13 zunächst mehr oder weniger gerade und sodann bogenförmig abknickend bis zur Längsschweißung 5 erstreckt. Wie aus der Zusammenschau der Figure 2 und 3 erkennbar ist, entspricht die Breite 9 der Vorderlage 2 der Summe der Länge 15 der Rückenlehne 11, dem zweifachen der Tiefe 14 des Spalts 13 und der Länge 16 des Sitzpolsters 12. Die Vorderlage 2 besitzt damit im Vergleich zu Sitzbezügen nach dem Stand der Technik eine größere Breite 9, weil die bisher bekannten Sitzbezüge sämtlich so gestaltet sind, daß die beiden Längen 15 und 16 am Übergang bzw. Beginn des Spalts 13 direkt aneinander anschließen.

Die Vorderlage 2 bildet mit der Rücklage 3 im Anschluß an die Längsfalte 4 eine erste Tasche 17 und im Bereich anschließend an die Längsschweißung 5 eine zweite Tasche 18. Die Taschen 17 und 18 sind durch die Querschweißungen 6 und 7 seitlich geschlossen und nur aus dem Mittelbereich her offen, so daß es möglich ist, den Sitzbezug 1 in der aus Figur 3 ersichtlichen Weise mit der Tasche 17 über die Rückenlehne 11 und mit der Tasche 18 über Bereiche des Sitzpolsters 12 zu stülpen. Nach einem solchen Stülpvorgang befinden sich die Materialbereiche der Kunststoffolie, die die Vorderlage 2 bilden, in mehr oder weniger geraffter oder gefalteter Form außerhalb des Spalts 13 etwa auf der nutzbaren Oberfläche des Sitzpolsters 12. Mit einer Rüsselplatte 19, die an einem nur angedeuteten Roboterarm vorgesehen ist, kann der Materialbereich der Vorderlage 2, der der doppelten Tiefe 14 des Spalts 13 entspricht, so in den Spalt 13 eingeschoben werden, wie dies Figur 3 in idealisierter Darstellung zeigt. Es wird dabei eine als Fixier- und Eingriffsmittel dienende Tasche 20 gebildet bzw. die Breite 9 der Vorderlage 2 ist so bemessen, daß sie zur Bildung dieser Tasche 20 ausreicht. Die Vorderlage 2 besitzt also immanent eine Tasche 20, und zwar gemäß der einfachsten Ausführungsform des Sitzbezugs 1, wie er in den Figuren 1 bis 3 dargestellt ist. Es versteht sich, daß die Rüsselplatte 19 beim Einschieben der Tasche 20 in den Spalt 13 am Sitz von vorn in den Spalt 13 eingeführt wird. Es ist auch möglich, die Tasche 20 von Hand in den Spalt 13 einzuführen, wobei es insbesondere auf einen Mittelbereich 21 ankommt, der in Figur 1 durch eine gepunktete Darstellung verdeutlicht ist. Es ist natürlich auch möglich, bei der Ausführungsform der Figuren 1 bis 3 die Tasche 20 über die Breite des Kraftfahrzeug-Sitzes durchgehend und sorgfältig einzuschieben. Im allgemeinen ist dies jedoch nicht erforderlich und es genügt, dies im Mittelbereich 21 zu tun. Im Mittelbereich 21, der sich etwa über 1/3 bis 2/3 der Gesamtbreite des Kraftfahrzeug-Sitzes erstrecken kann, besitzt der Spalt 13 eine mehr oder weniger geradlinige Gestalt, so daß auch die Rüsselplatte 19 als ebene Platte entsprechend breit ausgebildet sein kann. Grundsätzlich wäre es jedoch unschädlich, wenn die Rüsselplatte 19 in ihrer Formgebung auf die betreffende Formgebung des Spalts 13 abgestimmt wäre. Die als Fixier- und Eingriffsmittel dienende Tasche 20 wird auch bei der Ausführungsform gemäß den Figuren 1 bis 3 seitlich, also nach beiden Sitz-Seiten hin, geschlossen gestaltet. Es kann zweckmäßig sein, beim Einschieben der Tasche 20 beim Hersteller des Kraftfahrzeug-Sitzes 10 eine Rüsselplatte 19 zu benutzen, die mehr oder weniger über die Breite des Kraftfahrzeug-Sitzes und damit die Länge des Spaltes 13 durchgehend vorgesehen ist und auch der meist gekrümmten Formgestaltung des Spalts 13 folgt. Es wäre auch möglich, mehrere Rüsselplatten 19 über die Länge des Spalts 13 nacheinander zur Einwirkung zu bringen. Für eine Handhabung des Kraftfahrzeug-Sitzes in Verbindung mit Förderanlagen reicht es dagegen im allgemeinen aus, wenn die Rüsselplatte 19 nur eine Breite besitzt, durch die der Mittelbereich 21 abgedeckt wird. Dies gilt insbesondere für eine Rüsselplatte 19, mit der der Kraftfahrzeug-Sitz 10 einschließlich des darauf sitzenden Sitzbezugs 1 am Montageband des Kraftfahrzeugherstellers in die Karosserie des Kraftfahrzeugs eingeschwenkt und dort positioniert wird. Es versteht sich, daß die Rüsselplatte 19 damit von vorn in den Spalt 13 einfährt und nach der Positionierung des Kraftfahrzeug-Sitzes 10 in der Fahrzeugkarosserie in entgegengesetzter Richtung nach vorn aus dem Spalt 13 wieder ausfährt, wobei die Tasche 20 im Spalt 13 verbleibt. Dabei spielt der unterschiedliche Reibungskoeffizient eine Rolle, derart, daß die Oberfläche der Tasche, die dem Polster zugewandt ist, den größeren Reibungskoeffizienten hat und somit im Spalt haftet. Dadurch, daß die der Rüsselplatte zugewandte Oberfläche den kleineren Reibungskoeffizienten hat, d. h. glatt ist, bleibt die Tasche nicht an der Rüsselplatte hängen und wird auch beim Herausziehen des Roboterarms nicht wieder aus dem Spalt gezogen. Die Tasche 20 stellt ein Fixier- und Eingriffsmittel dar, welches gleichzeitig der Fixierung und dem strammen Sitz des Sitzbezugs 1 auf dem Kraftfahrzeug-Sitz 10 dient. Der Sitzbezug wird somit am Kraftfahrzeug-Sitz 10 auch dann gehalten, wenn der Kraftfahrzeug-Sitz 10 kopfüber hängend auf einer Förderanlage transportiert wird, so daß der Sitzbezug nicht herabfallen kann. Auch wird einer Verrutschungsgefahr des Sitzbezugs 1 auf dem Kraftfahrzeug-Sitz 10 entgegengewirkt, wie er bei Bewegungen eines auf dem Sitz sitzenden Monteurs auftrat. Der Sitzbezug 1 bekommt einen perfekten, strammen Sitz und schützt den Kraftfahrzeug-Sitz 10 während seiner gesamten Reise, Handhabung und Benutzung zwischen dem Sitzhersteller, dem Automobilwerk bis zum Automobilhändler und zur Auslieferung des Kraftfahrzeugs an den Kunden. Erst dann wird der Sitzbezug 1 entfernt. Da die Vorderlage 9 des Sitzbezugs 1 nicht durchstoßen und nicht durchlöchert wird, wird mit der Abnahme des Sitzbezugs 1 vom Kraftfahrzeug-Sitz 10 zugleich auch Staub oder versehentlich in die Tasche 20 im Spalt 13 eingefallene Gegenstände mitentfernt.

Wie Figur 1 erkennen läßt, können im Bereich der Längsfalte 4 randoffene Ausstanzungen 22 vorgesehen sein, die der Montage von Kopfstützen dienen. Wenn die Kopfstützen vor Anbringung des Sitzbezugs 1 am Kraftfahrzeug-Sitz 10 montiert sein sollen, ist es zweckmäßig, den Sitzbezug 1 so auszustatten, daß er auch die Kopfstützen mit überdeckt, wodurch sich seine notwendige Breite 9 entsprechend erhöht.

Figur 4 zeigt eine zweite Ausführungsform des Sitzbezugs 1, die weitgehend mit der Ausführungsform der Figuren 1 bis 3 übereinstimmt. Die Tasche 20 tritt hier jedoch etwas deutlicher und fixierter in Erscheinung. Die Vorderlage 2 ist gefaltet, so daß eine Faltkante 23 ausgebildet ist. Durch Schrägschweißungen 24, die beidseitig durchgeführt sind, ist die Tasche 20 seitlich geschlossen, wobei infolge der Schräganordnung der Schrägschweißung 24 Abfallzwickel entstehen, die hier nicht dargestellt sind. Die Schrägschweißung 24 wird als Trenn- und Verbindschweißung durchgeführt, so daß die Vorderlage in diesem Bereich linienförmig geschlossen ist und die Abfallstücke gleichzeitig abgetrennt werden. Der Übersichtlichkeit halber sind in Figur 5 die Querschweißungen 7 und die Schrägschweißung 24 nicht dargestellt. Die Anordnung der beiden Schrägschweißungen 24, die auch als durchgehende, d. h. auch die Faltkante 23 durchgehend bildende Schweißung ausgebildet sein kann, beispielsweise wenn der obere Bereich des Sitzbezugs aus einer ersten Flachfolie und der untere Bereich des Sitzbezugs 1 aus einer zweiten Flachfolie zusammengefügt werden, erbringt gegenüber der Ausführungsform der Figuren 1 bis 3 insofern einen wesentlichen Vorteil, als die Bereiche der Vorderlage 9 an den beiden Rändern an Verbindungspunkten 25 direkt miteinander verbunden sind. Hierdurch werden die betreffenden Bereiche der Vorderlage 2, die im Anschluß an den Beginn des Spalts 13 die Rückenlehne 11 und das Sitzpolster 12 abdecken, aneinander geführt und gegeneinander ausgerichtet. Der Sitzbezug 1 bekommt damit auch in diesen Bereichen beim Überstülpen über den Kraftfahrzeug-Sitz 10 automatisch seinen richtigen Sitz und seine straffe Gestalt.

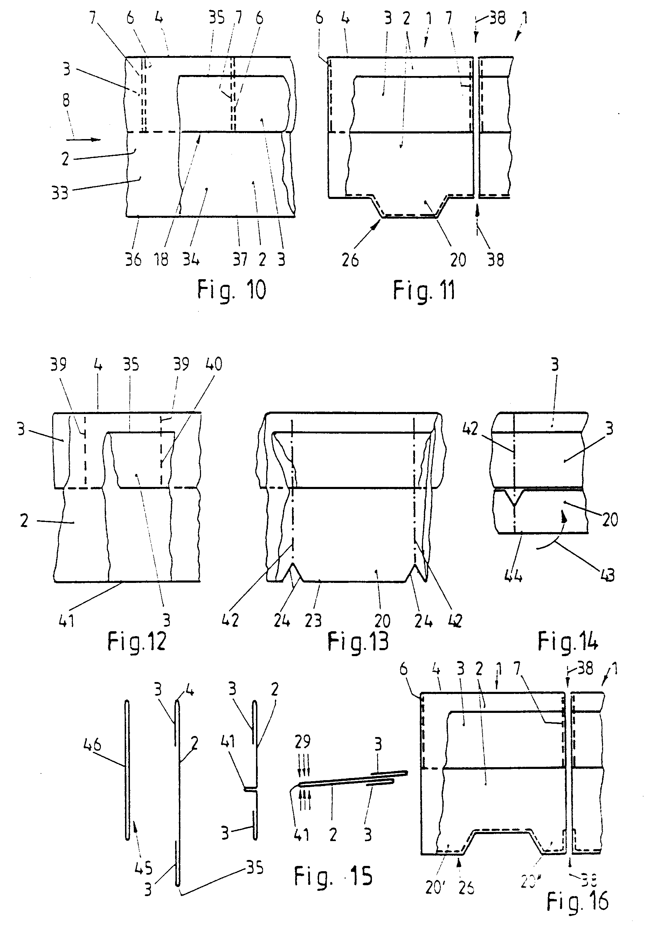

Figur 6 zeigt eine weitere Ausführungsform des Sitzbezugs 1, wie er auch nachfolgend noch anhand der Figuren 10 und 11 an einem bevorzugten Herstellungsverfahren unter Verwendung zweier Flachfolien erstellt werden kann. Wesentliches Merkmal dieses Sitzbezugs 1 gemäß Figur 6 ist eine Formschweißung 26, die vom einen Rand des Sitzbezugs 1 bis zum anderen Rand durchgehend vorgesehen ist, wobei diese Formschweißung 26 eine doppelt S-förmig gekrümmte Gestalt aufweisen kann, wie dies Figur 6 zeigt. Auch diese Formschweißung wird als Verbindungs- und Trennschweißung angewandt. Die beiden Abfallstücke sind dann insoweit größer gestaltet und die als Fixier- und Eingriffsmittel dienende Tasche ist auch hier, ähnlich wie bei der Ausführungsform der Figur 4, seitlich geschlossen ausgebildet, wobei sich die so gebildete Tasche 27 etwa auf den in Figur 1 angedeuteten Mittelbereich 21 erstreckt. Diese Ausführungsform hat den besonderen Vorteil, daß nicht nur randseitig Verbindungspunkte 25, sondern Verbindungslinien 28 entstehen. Hierdurch und durch die insoweit vergrößerten Abfallstücke wird eine Faltenbildung der Vorderlage 2 beim Einschieben der Tasche 27 in den Spalt 13 vermieden. Der Sitzbezug bekommt einen noch besseren strammen und glatten Sitz auf dem Kraftfahrzeug-Sitz 10. Es versteht sich, daß die Breite der Tasche 27 an die Breite der Rüsselplatte 19 in der Weise angepaßt ist, daß das Einschieben der Tasche 27 in den Spalt 13 ohne weiteres möglich ist und auch das nachfolgende Herausziehen der Rüsselplatte 19 nicht dazu führt, daß die Tasche 27 wieder aus dem Spalt 13 herausgezogen wird.

Die in Figur 7 dargestellte weitere Ausführungsform des Sitzbezugs 1 schließt an die Ausführungsform der Figur 4 an. Die Vorderlage 2 ist unter Bildung der Faltkante 23 gefaltet und es sind Querschweißungen 29 vorgesehen, durch die die Tasche 20 seitlich geschlossen wird und andererseits die Verbindungspunkte 25 gebildet werden. Zusätzliche Querschweißungen 30 sorgen einerseits für weitere Verbindungspunkte 31 und schaffen andererseits die Andeutung der auf den Mittelbereich 21 begrenzten Tasche 27. Bei dieser Ausführungsform entsteht kein Abfall.

Während bei den bisher gezeigten Ausführungsformen das der doppelten Tiefe 14 entsprechende Material der Vorderlage 2 doppellagig angeordnet wurde, zeigen die Figuren 8 und 9 eine Ausführungsform, bei der dieses Material sechslagig in drei nach rückwärts abstehenden Falten (und zwei nach vorn stehenden Falten) eingefaltet wird. Durch eine Pfeildarstellung ist auch hier eine Querschweißung 29 angedeutet, die sich über sämtliche Falten hinweg erstrecken kann. Die Rüsselplatte 19 wird gemäß Pfeil 32 symmetrisch zwischen den beiden nach vorn stehenden Falten zum Einsatz gebracht, so daß das Einschieben der Tasche 20 in den Spalt 13 sich gleichsam in einem teleskopischen Ausstülpen erschöpft. Wenn die Vorderlage 2 aus einem Kunststoffmaterial besteht, dessen dem Benutzer des Sitzes zugekehrte Oberfläche glatt und dessen der Rückenlehne und dem Sitzpolster 12 zugekehrte Oberfläche rauh bzw. rutschgesichert ausgebildet ist, besteht der Vorteil, daß bei dem teleskopartigen Ausstülpen der Tasche 20 Materialbereiche mit ihren glatten Flächen aneinanderliegend verschoben werden, was besonders leichtgängig ist. Es empfiehlt sich im allgemeinen, zumindest bei den Ausführungsformen der Figuren 4 bis 9, das Material der Vorderlage 2 in der beschriebenen Art und Weise mit unterschiedlichem Eigenschaften auf den beiden Oberflächen auszustatten, während es für die Ausführungsform der Figuren 1 bis 3 sinnvoll sein kann, Kunststoffmaterial zu verwenden, welches auf beiden Oberflächen gleich glatt ausgebildet ist.

Anhand der Figuren 10 und 11 wird ein mögliches Herstellverfahren für den Sitzbezug 1 gemäß Figur 6 näher beschrieben. Eine Bahn einer ersten Flachfolie 33 wird unter Bildung der Längsfalte 4 so umgefaltet, daß die später die Tasche 17 bildende Rücklage 3 unter den Materialbereich zu liegen kommt, der später die Vorderlage 2 bildet. Die Querschweißungen 6 und 7 werden in dem gezeigten Bereich angebracht. Über diese Flachfolie 33 wird eine zweite Flachfolie 34 geführt, jedoch so, daß eine Längsfalte 35 entsteht, die der Längsschweißung 5 des Ausführungsbeispiels der Figur 1 entspricht, so daß die die spätere Tasche 18 bildende Rücklage 3 frei sichtbar ist. Auch hier werden die Querschweißungen 6 und 7 angebracht. Die beiden Flachfolien 33 und 34 sind so übereinandergeführt, so daß sich deren freie Längsränder 36 und 37 decken.

Wie Figur 11 erkennen läßt, wird nun die Formschweißung 26 mit ihrem schon beschriebenen S-förmigen Verlauf unter Bildung von Abfallstücken angebracht, wobei gleichzeitig eine Verbindung der beiden Flachfolien 33 und 34 erfolgt und die Abfallstücke zugleich abgetrennt werden. Durch einen durch zwei Pfeile angedeuteten Querschnitt 38 zwischen den Querschweißungen 7 und 6 werden die einzelnen Sitzbezüge 1 voneinander abgetrennt und können gestapelt werden.

Anhand der Figuren 12 bis 14 wird eine weitere Herstellungsmöglichkeit aufgezeigt. Hierbei findet ein Schlauch Verwendung und es wird eine Ausführungsform des Sitzbezugs 1 erstellt, die in Figur 4 dargestellt ist. Der geblasene Schlauch aus Kunststoff wird zunächst längs einer Linie aufgetrennt. Dieser Schlauch wird in der Weise auseinandergedrückt, wie dies Figur 12 zeigt, so daß die beiden Rücklagen 3 entstehen. Entsprechend den Sitzbezügen 1 werden linienförmige Verbindungsschweißungen 39 und 40 angebracht und die zusammenhängende Bahn über eine Längsfalte 41 in der dargestellten Weise zueinander geführt, so daß die beiden Rücklagen 3 jeweils nach außen zeigen. Sodann werden die Schrägschweißungen 24 angebracht, so daß sich die Tasche 20 ausbildet. In Figur 13 sind die Verbindungsschweißungen 39 und 40 aus Übersichtlichkeitsgründen nicht mehr dargestellt. Durchgehende Perforationslinien 42 werden fluchtend bzw. die Verbindungsschweißungen 39 und 40 durchsetzend angebracht. Wie Figur 14 erkennen läßt, wird anschließend gemäß Pfeil 43 der die Tasche 20 enthaltende Teil unter Bildung einer weiteren Längsfalte 44 übergefaltet, so daß das Material der Kunststoffolie in diesem Bereich wie auch im Bereich der Rücklagen 3 vierfach liegt. Damit wird es möglich, die so vorbereitete Endlosbahn zu einer Vorratsrolle aufzuwickeln, die eine verringerte Breite aufweist und Zylindrische Gestalt besitzt.

Die anhand der Figuren 12 bis 14 beschriebene Herstellungsweise kann auch dann genutzt werden, wenn nicht ein Halbschlauch, sondern zwei Flachfolien eingesetzt werden. In diesem Fall setzen sich die Schrägschweißungen 24 anstelle der Faltkante 23 auch in diesem Bereich fort.

Figur 15 schließlich zeigt eine weitere Herstellungsmöglichkeit unter Verwendung eines Halbschlauchs, wobei hier Querschnittsdarstellungen anstelle der in den Figuren 10 bis 14 gezeigten Draufsichten dargestellt sind. Der Schlauch 45, wie er aus dem Blasvorgang hervorgeht, wird zunächst an einer Stelle 46 zu einem Halbschlauch aufgeschnitten. Dies erfolgt der Länge nach und durch entsprechendes Auseinanderziehen werden die beiden Rücklagen 3 und die Vorderlage 2 gebildet, wobei gleichzeitig die Längsfalte 4 und die Längsfalte 35 entstehen. Sodann wird die Bahn übereinandergefaltet, wobei die Längsfalte 41 entsteht und es erfolgt z. B. eine durch Pfeile angedeutete Querschweißung 29. Die Gestaltung der hier nicht dargestellten Querschweißungen 6 und 7 und/oder die Anbringung von Perforationen wird entsprechend eingeleitet und durchgeführt.

Figur 16 zeigt eine weitere Ausführungsform des Sitzbezugs 1, der an die Beispiele der Figuren 7 oder 11 anschließt. Es ist gleichsam die Umkehrung gegenüber Figur 11 gezeigt. Die Formschweißung 26 ist so geführt, daß in der Mitte ein Abfallstück entsteht und seitlich rechts und links je eine in den Spalt 13 einführbare als Fixier- und Eingriffsmittel dienende Tasche 20', 20'' gebildet wird. Dieser Sitzbezug 1 ist also für einen Kraftfahrzeugsitz 10 bestimmt, dessen die Verschwenkung der Rückenlehne 11 gegenüber dem Sitzpolster 12 ermöglichende Gelenkanordnung mittig vorgesehen ist, so daß in den sich nach außen rechts und links anschließenden Bereichen gleichsam zwei Spalte 13 gebildet sind, wobei die Tasche 20' in dem einen Spalt und die andere Tasche 20'' in dem anderen Spalt verankert wird. Damit erhält der Sitzbezug einen ausgezeichneten straffen Sitz auf dem Kraftfahrzeug-Sitz 10. Durch die beidseitige Fixierung sind die Problembereiche des Kraftfahrzeug-Sitzes 10 optimal abgedeckt und geschützt. Auch der Sitzbezug 1 gemäß Figur 16 kann aus einem durchgehenden Materialstück, z. B. in Form eines Halbschlauchs, oder aus zwei Flachfolien hergestellt werden.

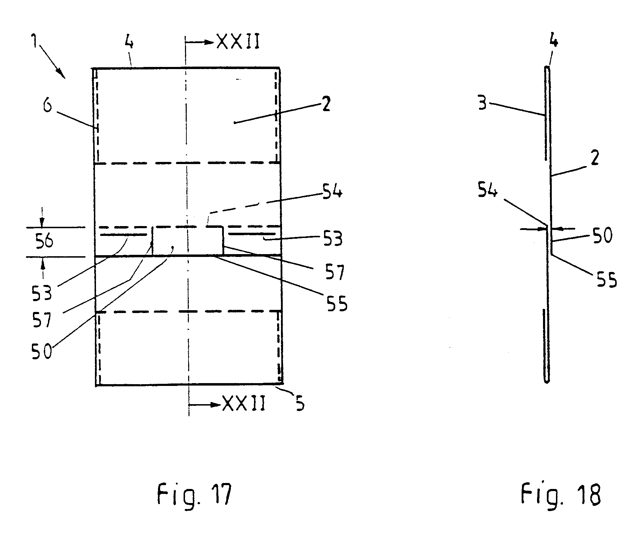

Bei dem Ausführungsbeispiel der Figuren 17 und 18 werden zwei Flachfolien eingesetzt, die durch Schweißungen 53 miteinander verbunden sind. Die oben dargestellte Flachfolie weist einen Unterrand 55 auf, der ebenso wie der Oberrand 54 geradlinig verläuft. Es ist hier eine Überdeckung 56 vorgesehen. Zur Ausbildung einer Tasche 50 sind in dem betreffenden Teil der Flachfolie randoffene Anschnitte 57 vorgesehen. Die in Richtung auf die Randbereiche vorgesehenen Materialbereiche der Flachfolie stören hier nicht.

### Bezugszeichenliste:

- 1: = Sitzbezug
- 2: = Vorderlage
- 3: = Rücklage
- 4: = Längsfalte
- 5: = Längsschweißung
- 6: = Querschweißung
- 7: = Querschweißung
- 8: = Pfeil
- 9: = Breite
- 10: = Kraftfahrzeug-Sitz
- 11: = Rückenlehne
- 12: = Sitzpolster
- 13: = Spalt
- 14: = Tiefe
- 15: = Länge
- 16: = Länge
- 17: = Tasche
- 18: = Tasche
- 19: = Rüsselplatte
- 20: = Tasche
- 21: = Mittelbereich
- 22: = Ausstanzung
- 23: = Faltkante
- 24: = Schrägschweißung
- 25: = Verbindungspunkt
- 26: = Formschweißung
- 27: = Tasche
- 28: = Verbindungslinie
- 29: = Querschweißung
- 30: = Querschweißung
- 31: = Verbindungspunkt
- 32: = Pfeil
- 33: = Flachfolie
- 34: = Flachfolie
- 35: = Längsrand
- 36: = Längsrand
- 37: = Längsrand
- 38: = Trennschnitt
- 39: = Verbindungsschweißung
- 40: = Verbindungsschweißung
- 41: = Längsfalte
- 42: = Perforationslinie
- 43: = Pfeil
- 44: = Längsfalte
- 45: = Schlauch
- 46: = Stelle
- 50: = Tasche
- 53: = Schweißung
- 54: = Oberrand
- 55: = Unterrand
- 56: = Überdeckung
- 57: = Ausschnitt

## Patentansprüche

1. Sitzbezug zum Schutz eines Kraftfahrzeug-Sitzes aus einem doppellagigen Teil aus Kunststoffolie, insbesondere für die Erstausstattung, mit einer durchgehenden, die Sitzfläche und die Rückenlehnenfläche des Sitzes schützenden Vorderlage (2) und einer mit der Vorderlage durch Querschweißung (6, 7) verbundenen Rücklage (3), die in Verbindung mit der Vorderlage eine die Rückenlehne (11) des Sitzes (10) zumindest teilweise aufnehmende erste Tasche (17) und ggf. eine das Sitzpolster (12) zumindest teilweise umschließende zweite Tasche (18) bildet, **dadurch gekennzeichnet**, daß die Vorderlage (2) eine nach beiden Sitz-Seiten geschlossene Tasche (20, 27, 50; 20', 20'') als Fixier- und Eingriffsmittel zum Einklemmen im Bereich des Spalts (13) zwischen Rückenlehne (11) und Sitzpolster (12) aufweist.

2. Sitzbezug nach Anspruch 1, **dadurch gekennzeichnet**, daß die Tasche (20, 27, 50; 20', 20'') aus dem Material der Vorderlage (2) gebildet ist, welches die Länge (15) der Rückenlehne (11) und die Länge (16) des Sitzpolsters (12) überragt.

3. Sitzbezug nach Anspruch 1 oder 2, **dadurch gekennzeichnet**, daß die Tasche (20, 27, 50; 20', 20'') beidseitig Querschweißungen (29) aufweist.

4. Sitzbezug nach Anspruch 1 oder 2, **dadurch gekennzeichnet**, daß die Tasche (20, 27, 50; 20', 20'') beidseitig Schrägschweißungen (24) aufweist.

5. Sitzbezug nach einem oder mehreren der Ansprüche 1 bis 4, **dadurch gekennzeichnet**, daß die Tasche (20, 27, 50; 20', 20'') durch eine in Spaltrichtung geführte Formschweißung (26) geschlossen ausgebildet ist, die in ihrer Breite den Mittelbereich (21) des Spaltes (13) überdeckt.

6. Sitzbezug nach Anspruch 1, **dadurch gekennzeichnet**, daß die Vorderlage (2) auf ihrer Rückseite einen höheren Reibungskoeffizienten als auf ihrer Vorderseite hat.

7. Verfahren zur Herstellung von Sitzbezügen zum Schutz von Kraftfahrzeug-Sitzen nach einem oder mehreren der Ansprüche 1 bis 6, wobei aus Kunststoffolie in Form eines geschlitzten Schlauchs die Vorderlage und die Rücklage bildende Bahnen gebildet und die beiden Bahnen für jeden Sitzbezug durch Querschweißung (6, 7) miteinander verbunden werden, **dadurch gekennzeichnet**, daß die auch die Vorderlage (2) bildende Bahn der Kunststoffolie längsgefaltet und zur Bildung des Fixier- und Eingriffsmittels durch eine punkt- oder linienförmige Schweißung taschenartig geschlossen wird.

8. Verfahren zur Herstellung von Sitzbezügen zum Schutz von Kraftfahrzeug-Sitzen nach einem oder mehreren der Ansprüche 1 bis 6, wobei aus Kunststoffolie in Form von Flachfolien die Vorderlage und die Rücklage bildende Bahnen gebildet und die Bahnen für jeden Sitzbezug durch Querschweißung (6, 7) miteinander verbunden werden, **dadurch gekennzeichnet**, daß die auch die Vorderlage bildenden Bahnen mit den den Taschen abgekehrten Rändern aufeinandergelegt und zur Bildung des Fixier- und Eingriffsmittels durch eine punkt- oder linienförmige Schweißung taschenartig geschlossen werden.

9. Verfahren nach Anspruch 7 oder 8, **dadurch gekennzeichnet**, daß die Tasche (20, 27, 50) im Mittelbereich des Spalts zwischen Rückenlehne und Sitzpolster ausgebildet wird.

10. Verfahren nach Anspruch 7 oder 8, **dadurch gekennzeichnet**, daß die als Fixier- und Eingriffsmittel dienende Tasche (20, 27, 50; 20', 20'') in Richtung auf die Taschen (17, 18) für die Rückenlehne (11) und das Sitzpolster (12) übergefaltet wird, bevor das Aufwickeln zu einer Vorratsrolle erfolgt.

## Claims

1. Seat cover made from a double-layered piece of plastic foil for protecting a motor vehicle seat, in particular for the initial (original) fitting-out, having a continuous front layer (2) to protect the seat surface and the backrest surface of the seat, and a rear layer (3) connected to the front layer by means of transverse welded seams (6, 7), whereby said rear layer forms, in conjunction with the front layer, a first pocket (17) enclosing at least part of the backrest (11) of the seat (10) and, if required, a second pocket (18) enclosing at least part of the seat cushion (12), **characterized in that** the front layer (2) has a pocket (20, 27, 50; 20', 20'') closed on both sides for clamping in the area of the gap (13) between backrest (11) and seat cushion (12).

2. Seat cover according to claim 1, **characterized in that** the pocket (20, 27, 50; 20', 20'') is made from that material of the front layer (2) which extends over the length (15) of the backrest (11) and the length (16) of the seat cushion (12).

3. Seat cover according to claim 1 or 2, **characterized in that** the pocket (20, 27, 50; 20', 20'') is closed on both sides by transverse welded seaming (29).

4. Seat cover according to claim 1 or 2, **characterized in that** the pocket (20, 27, 50; 20', 20'') is closed on both sides by diagonal welded seaming (24).

5. Seat cover according to one or several of the claims 1 to 4, **characterized in that** the pocket (20, 27, 50; 20', 20'') is closed by profiled welded seaming (26) provided in the direction of the gap, whereby the width of the pocket covers the centre section (21) of the gap (13).

6. Seat cover according to claim 1, **characterized in that** the the front layer (2) has a higher coefficient of friction on its rear side than on its front side.

7. Method of manufacturing seat covers for protecting vehicle seats according to one or several of the claims 1 to 6, whereby the front layer is made from plastic foil in the form of a tube which has been slit, whereby the widths forming the front layer and the rear layer are formed and the two widths for each seat cover are joined together by means of transverse welded seams (6, 7), **characterized in that** the plastic foil forming also the front layer (2) is folded longitudinally and is closed like a pocket by spot or seam welding to form a means of fastening and insertion.

8. Method for manufacturing seat covers for protecting vehicle seats according to one or several of the claims 1 to 6, whereby the front layer and the rear layer are made from plastic foil in the form of foil sheets and both sheets for each seat cover are joined together by transverse welded seams (6, 7), **characterized in that** the plastic foil sheets forming also the front layer are laid on top of each other with the edges facing away from the pockets and are closed like pockets by spot or seam welding to form a means of fastening and insertion.

9. Method according to claims 7 or 8, **characterized in that** the the pocket (20, 27, 50) is located in the middle area of the gap between backrest and seat cushion.

10. Method according to claims 7 or 8, **characterized in that** the pocket (20, 27, 50; 20', 20'') forming a means of fastening and insertion is folded over in the direction of the pockets (17, 18) for the backrest (11) and the seat cushion (12) before winding up into a supply roll is carried out.

## Revendications

1. Revêtement de siège pour la protection d'un siège d'un véhicule fabrique à partir d'une partie de feuille plastique à deux couches, en particulier pour l'équipement d'origine, avec une couche avant (2) continue protégeant la surface d'assise et la surface du dossier du siège et une couche arrière (3) assemblée à la couche avant par soudure transversale (6, 7), laquelle couche arrière forme en liaison avec la couche avant, une première poche (17) logeant au moins partiellement le dossier (11) du siège (10) et éventuellement une deuxième poche (18) enfermant au moins partiellement le rembourrage (12) du siège, caractérisé en ce que la couche avant (2) présente une poche (20, 27, 50 ; 20', 20''), fermée des deux côtés du siège comme moyen de fixation et moyen d' engagement à coincer dans la zone de la fente (13), entre le dossier (11) et le rembourrage de siège (12).

2. Revêtement de siège selon la revendication 1, caractérisé en ce que la poche (20, 27, 50 ; 20', 20'') est formée dans le matériau de la couche avant (2), qui dépasse de la longueur (15) du dossier (11) et de la longueur (16) du rembourrage de siège (12).

3. Revêtement de siège selon la revendication 1 ou 2, caractérisé en ce que la poche (20, 27, 50 ; 20', 20'') présente des soudures transversales (29) des deux côtés.

4. Revêtement de siège selon la revendication 1 ou 2, caractérisé en ce que la poche (20, 27, 50 ; 20', 20'') présente des soudures obliques (24) des deux côtés.

5. Revêtement de siège selon une ou plusieurs des revendications 1 à 4, caractérisé en ce que la poche (20, 27, 50 ; 20', 20'') est réalisée fermée par une soudure de forme (26) s'étendant dans la direction de la fente, et qui, dans sa largeur, recouvre la zone médiane (21) de la fente (13).

6. Revêtement de siège selon la revendication 1, caractérisé en ce que la couche avant (2) présente sur sa face arrière un coefficient de friction plus élevé que sur sa face avant.

7. Procédé de fabrication de revêtements de siège pour la protection de sièges de véhicule selon une ou plusieurs des revendications 1 à 6, dans lequel à partir d'une feuille plastique sous la forme d'un tuyau fendu, sont formées des bandes constituant la couche avant et la couche arrière et les deux bandes sont assemblées entre elles pour chaque revêtement de siège par soudure transversale (6, 7) caractérisé en ce que la bande de feuille de matière plastique, formant aussi la couche avant (2), est pliée longitudinalement et est fermée, à la manière d'une poche, par une soudure ponctuelle ou en ligne, pour former le moyen de fixation et le moyen d'engagement.

8. Procédé de fabrication de revêtements de siège pour la protection de sièges de véhicule selon une ou plusieurs des revendications 1 à 6, dans lequel à partir d'une feuille plastique sous la forme de feuilles plates sont formées des bandes constituant la couche avant et la couche arrière et les bandes sont assemblées entre elles pour chaque revêtement de siège par soudure transversale (6, 7), caractérisé en ce que les bandes formant aussi la couche avant, sont superposées avec les bords tournés à l'opposé des poches et sont fermées à la manière d'une poche, par une soudure ponctuelle ou en ligne, pour former le moyen de fixation et le moyen d'engagement.

9. Procédé selon la revendication 7 ou 8, caractérisé en ce que la poche (20, 27, 50) est formée dans la zone médiane de la fente, entre le dossier et le rembourrage de siège.

10. Procédé selon la revendication 7 ou 8, caractérisé en ce que la poche (20, 27, 50 ; 20', 20''), servant de moyen de fixation et de moyen d'engagement est pliée en direction des poches (17, 18) pour le dossier (11) et le rembourrage de siège (12), avant que ne soit effectué un bobinage en une bobine de réserve.
